# EUROPÄISCHE PATENTANMELDUNG

(11) **EP 3 012 597 A1**
(43) Veröffentlichungstag der Anmeldung: **27.04.2016**
(21) Anmeldenummer: 14199593.6
(22) Anmeldetag: 22.12.2014
(51) Int. Cl.: G01F 1/684, G01L 9/06

(54) **Messeinrichtung**

(30) Priorität: 21.10.2014 EP 14189690
(71) Anmelder: wenglor fluid GmbH, 88069 Tettnang (DE)
(72) Erfinder: Leupold, Martin, 88069 Tettnang (DE); Messmer, Markus, 88069 Tettnang (DE)
(74) Vertreter: Engelhardt & Engelhardt

(57) **Zusammenfassung**

Bei einer Messeinrichtung (1) zur Bestimmung des Fließverhaltens eines durch ein Rohr (2) strömendes Mediums (3), bestehend aus
- einer Trägerplatte (5), die in eine in das Rohr (2) eingearbeitete Durchgangsöffnung (12) eingesetzt und gasdicht mit diesem verbunden ist,
- einer auf der Trägerplatte (5) aufgebrachten Schicht (6) vorzugsweise aus Dielektrikum, die auf der Oberfläche der Trägerplatte (5) vorgesehen ist und diese ganz oder teilweise elektrisch isolierend bedeckt,
- aus mindestens einem Messsensor (8, 15), der auf der Oberseite der Dielektrikum-Schicht (6) oder in dieser eingebettet angeordnet ist und der zwei von außen zugängliche Kontaktflächen (9) aufweist, die mit Leitungen (10) verbunden sind und
- aus einer elektrischen Steuer- und Auswerteeinrichtung (11), die elektrisch mit dem jeweiligen Messsensor (8, 15) gekoppelt ist, soll durch die Messeinrichtung (1) eine zuverlässige und exakte Bestimmung der Fließgeschwindigkeit (V) und des Druckes (P) eines Mediums (2) in einem Rohr (3) unabhängig von der Einbausituation und der Ausrichtung der Messeinrichtung (1) bildenden Bauteile erfolgen.

Diese Aufgabe ist dadurch gelöst, dass beabstandet zu dem jeweiligen Messsensor (8, 15) ein Heizwiderstandselement (7), vorzugweise in Form einer geschlossenen Leiterbahn (7'), angeordnet ist, dass das Heizwiderstandselement (7) über mindestens zwei Kontaktflächen (9) und elektrischen Leitungen (10) mit einer Stromquelle und der Steuer- und Auswerteeinrichtung (11) verbunden ist, dass durch die Steuer- und Auswerteeinrichtung (11) das Heizwiderstandselement (7) impulsweise bestromt ist, dass der jeweilige Messsensor (8) aus mehreren temperaturabhängigen Widerständen (R1.1, R1.2, R1.3 und R1.4) gebildet ist und dass durch die Steuer- und Auswerteeinheit (11) die gemessenen Werte des jeweiligen Messsensors (8, 15) erfasst und mit den Steuersignalen des Heizwiderstandselementes (7) verglichen und derart ausgewertet sind, dass durch diese die Strömungsgeschwindigkeit (V) und der Druckzustand (P) des Mediums (3) ermittelbar sind.

## Beschreibung

Die Erfindung bezieht sich auf eine Messeinrichtung und ein Verfahren zur Bestimmung des Fließverhaltens eines durch ein Rohr strömendes Medium nach den Oberbegriffen der Patentansprüche 1 und 15.

Aus der WO 2012/007922 A1 ist eine solche Messeinrichtung zu entnehmen, durch die mit Hilfe eines Druckmesssensors die Fließgeschwindigkeit eines Mediums in Abhängigkeit von erzeugten Druckschwankungen bestimmt ist. Die erzeugten Druckschwankungen werden mittels elektrischen Signalen ausgewertet, so dass über die Druckschwankungen und die derart veränderten elektrischen Signalen Aufschlüsse gezogen werden können, welche Fließgeschwindigkeit das Medium in einem Rohr aufweist.

Nachteiligerweise sind die Druckmesssensoren sowie die erforderlichen elektrischen Druckmesssensoren exakt in der Fließrichtung oder in Längsrichtung des Rohres des Mediums anzuordnen und zu positionieren. Ein fehlerhafter oder ungenauer Einbau der Messeinrichtung in dem Rohr führt zu erheblichen Messfehlern. Die eingeleiteten Druckimpulse sind nämlich durch die Strömungsgeschwindigkeit und die Strömungsrichtung des Mediums an die elektrischen Messsensoren weiterzuleiten. Wenn folglich die die Druckschwankungen erzeugenden Membranen und die elektrischen Messsensoren nicht exakt in Strömungsrichtung erreichen, können keine aussagekräftigen Rückschlüsse auf das Strömungsverhalten des Mediums errechnet werden.

Durch die WO 2011/141886 A2 ist ein Drucksensor beschrieben, der einen andersartigen konstruktiven Aufbau zwar aufweist, jedoch die identischen technischen Nachteile beinhaltet, wie die Messeinrichtung nach der WO 2012/007922 A1.

In Abhängigkeit von den Innenquerschnitten der verwendeten Rohre entstehen insbesondere in der Nähe der Rohrwandung Verwirbelungen in dem Medium, durch die die Fließgeschwindigkeit reduziert und abgelenkt ist. Gerade bei sehr kleinen Innenquerschnitten der Rohre führen solche Verwirbelungen dazu, dass die in das Medium eingeleiteten Druckimpulse nicht exakt in Strömungsrichtung des Mediums an die Druckauswertesensoren gelangen, wodurch erhebliche Messungenauigkeiten entstehen.

Ein anderes Messkonzept ist der DE 196 10 885 B4 zu entnehmen. Dort umfasst eine Messeinrichtung ein Heizwiderstandselement und einen Temperaturmesssensor, der über einen wärmeleitenden Trennkörper und einen in das Medium hineinragenden Messkopf Energie an das vorbeiströmende Medium leitet.

Nachteiligerweise ist das Heizwiderstandselement derart weit von dem vorbeiströmenden Medium beabstandet und durch mehrere zwar wärmeleitende Trennschichten von diesem getrennt durch die Wärmeübertragung verzögernden Bauteile, so dass aufgrund dieser zeitlichen Verzögerung des Wärmeübergangs Messfehler entstehen bzw. Messmethode anzuwenden ist, die eine längere Heizperiode aufweist und erst nach einer bestimmten Bestromung des Heizwiderstandselementes tatsächlich zuverlässige Messergebnisse liefert, denn erst nach einer bestimmten Zeitperiode ist eine Erwärmung des vorbeiströmenden Mediums feststellbar und messbar.

Aufgrund der zu verwendenden Messmethode ist jedoch eine zeitunabhängige Messung der Fließgeschwindigkeit des vorbeiströmenden Mediums nicht oder nur in vorgegebenen langen Zeitintervallen möglich.

Es ist daher Aufgabe der Erfindung, eine Messeinrichtung und ein Messverfahren der eingangs genannten Gattungen bereitzustellen, durch die zum einen eine zuverlässige und exakte Bestimmung der Fließgeschwindigkeit und des Druckes eines Mediums in einem Rohr unabhängig von der Einbausituation und der Ausrichtung der die Messeinrichtung bildenden Bauteile erfolgt und die zum anderen Messwerte generiert, durch die eine Bestimmung der Fließgeschwindigkeit, des Druckes und ggf. der Temperatur des Mediums ermöglicht ist, die auf einfach zu bestimmenden, vorgegebenen und zu messenden geometrischen oder physikalische Werte oder Innenquerschnitte basiert und die für beliebige Rohre geeignet ist.

Diese Aufgaben sind erfindungsgemäß durch die Merkmale des kennzeichnenden Teils von den Patentansprüchen 1 und 15 gelöst.

Weitere vorteilhafte Weiterbildungen der Erfindung ergeben sich aus den Unteransprüchen.

Dadurch, dass beabstandet zu dem jeweiligen Messsensor ein Heizwiderstandselement, vorzugweise in Form einer geschlossenen Leiterbahn, angeordnet ist, dass das Heizwiderstandselement über mindestens zwei Kontaktflächen und elektrischen Leitungen mit einer Stromquelle und der Steuer- und Auswerteeinrichtung verbunden ist, dass durch die Steuer- und Auswerteeinheit das Heizwiderstandselement impulsweise bestromt ist, dass der jeweilige Messsensor aus mehreren temperaturabhängigen Widerständen gebildet ist und dass durch die Steuer- und Auswerteeinheit die gemessenen Werte des jeweiligen Messsensors erfasst und mit den Steuersignalen für das Heizwiderstandselement verglichen und derart ausgewertet sind, dass durch diese die Strömungsgeschwindigkeit und der Druckzustand des Mediums ermittelbar sind, kann aufgrund der Temperaturabgabe und der Wölbung der Trägerplatte die Fließgeschwindigkeit und der Druck des Mediums errechnet werden, ohne dass die Messsensoren der Messvorrichtung exakt zu der Fließrichtung des Mediums auszurichten sind. Durch die Bestromung des Heizwiderstandselementes erwärmt sich nämlich die Trägerplatte impulsweise und das daneben vorbei fließende Medium wird in Abhängigkeit von der Bestromungsdauer und der eingebrachten Energiezufuhr aufgeheizt, wodurch sich Rückschlüsse auf die Fließgeschwindigkeit des Mediums errechnen lassen, in dem nach dem Abschalten des Heizwiderstandselementes der Temperaturabfall in Abhängigkeit von der Zeit durch den Messsensor gemessen ist, wodurch sich Werte ergeben, die in einer mathematischen Beziehung zu der tatsächlich vorherrschenden Fließgeschwindigkeit des Mediums stehen. Je schneller nämlich das Medium an dem Messsensor vorbeifließt, desto schneller fällt der gemessene Temperaturwert und umgekehrt. Es ist allerdings erforderlich, dass das Medium eine bestimmte Mindestffießgeschwindigkeit und ein möglichst laminares Strömungsverhalten aufweist, denn bei solchen Strömungsbedingungen entstehen die physikalischen bzw. mathematischen Beziehungen zwischen dem Temperaturentzug und der Strömungsgeschwindigkeit des Mediums. Der Druck des Mediums wird dabei durch eine druckabhängige Wölbung der Trägerplatte mittels des Messsensors erfasst. Die biegeelastische Trägerplatte ist nämlich proportional zu der Druckkraft des Mediums verformt. Der Messsensor erfasst diese Verformung der Trägerplatte und mittels einer mathematischen Beziehung ist der Druckzustand des Mediums ermittelt. Demnach sind mit dieser Messeinrichtung sowohl der Druckzustand und die Fließgeschwindigkeit des Mediums permanent erfassbar.

Es ist besonders vorteilhaft, die Innenkontur der Trägerplatte möglichst in der Rohrmitte anzuordnen, da in der Rohrmitte die größte Strömungsgeschwindigkeit des Mediums üblicherweise vorherrscht. In der Nähe von der Rohrwand wird das Medium abgebremst, so dass die Trägerplatte der Messeinrichtung möglichst im Zentrum des Rohres zu positionieren ist. Dabei kann die Außenkontur der Trägerplatte eine möglichst strömungsgünstige Form aufweisen, beispielsweise als Kalotte oder konkav bzw. konvex gekrümmte Fläche ausgestaltet sein.

Da die jeweiligen elektrischen Bauteile, wie Messsensoren für die Temperatur und Heizwiderstandselemente, in einem identischen Abstand zu dem Medium angeordnet sind und räumlich voneinander getrennt sind, sind diese elektrisch isoliert. Die Wärmeübergangszeiten zwischen dem Heizwiderstandselement und dem Medium einerseits und dem Medium und dem Messsensor andererseits werden nicht durch unterschiedliche Distanzen verfälscht. Vielmehr ergeben sich über die Laufzeiten der Wärmeübergänge zwischen den einzelnen Bauteilen und dem Medium lediglich sehr geringe Fehlerabweichungen.

Demnach kann die Messeinrichtung in einer beliebigen Position zu der Strömungsrichtung des Mediums in das Rohr eingebaut werden; eine komplizierte und exakte Positionierung der Messeinrichtung zu der Fließrichtung des Mediums ist folglich nicht notwendig. Darüber hinaus lassen sich mit Hilfe der erfindungsgemäßen Messeinrichtung exakte physikalische Messgrößen errechnen, die zum einen von der Temperatur und dem Druck des Mediums und zum anderen durch die Temperaturveränderungen mit der Fließgeschwindigkeit des Mediums in unmittelbarer physikalischer Verbindung stehen.

In der Zeichnung sind zwei erfindungsgemäße Ausführungsbeispiele einer Messeinrichtung dargestellt, die nachfolgend näher erläutert sind. Im Einzelnen zeigt:
- Figur 1: eine bevorzugte Einbauposition einer Messeinrichtung, in einem von einem Medium durchströmten Rohr, im Schnitt,
- Figur 2a: ein erstes Ausführungsbeispiel einer Messeinrichtung in der Einbauposition gemäß Figur 1 in vergrößerter Darstellung, bestehend aus einer Trägerplatte und einer auf der Trägerplatte aufgebrachten Dielektrikum-Schicht, auf der Heizwiderstandselemente, eine Leiterbahn und ein Messsensor angeordnet sind, der aus vier temperaturabhängigen Widerständen als Vollbrücke gebildet ist, und die über elektrische Leitungen mit einer Steuer- und Auswerteeinheit verbunden sind,
- Figur 2b: die Messeinrichtung gemäß Figur 2a entlang der Schnittlinie IIb-IIb,
- Figur 3a: ein zweites Ausführungsbeispiel einer Messeinrichtung in der Einbauposition gemäß Figur 1, in vergrößerter Darstellung, bestehend aus einer Trägerplatte und einer auf der Trägerplatte aufgebrachten Dielektrikum-Schicht, auf der Heizwiderstandselemente, eine Leiterbahn und ein Messsensor vorgesehen sind, der als Halbbrücke mit vier Widerständen ausgebildet ist, und einen Temperaturmesssensor aufweist, die über elektrische Leitungen mit einer Steuer- und Auswerteeinheit verbunden sind,
- Figur 3b: die Messeinrichtung gemäß Figur 3a entlang der Schnittlinie IIIb-IIIb,
- Figur 4: ein schematisches Schaltbild der Messeinrichtung gemäß den Figuren 1 bis 3b,
- Figur 5a: eine erste Ausführungsvariante der Trägerplatte für eine Messeinrichtung gemäß den Figuren 1 bis 3b mit einer in die Trägerplatte eingebrachten Nut zur Beeinflussung der Biegesteifigkeit der Trägerplatte, im Schnitt
- Figur 5b: eine zweite Ausführungsvariante einer Trägerplatte für eine Messeinrichtung gemäß den Figuren 1 bis 3b, die aus unterschiedlichen Materialpaarungen zur Beeinflussung der Biegesteifigkeit der Trägerplatte gebildet ist, im Schnitt, und
- Figur 5c: eine dritte Ausführungsvariante einer Trägerplatte für eine Messeinrichtung gemäß den Figuren 1 bis 3b mit einer Trägerplatte und einer Dielektrikum-Schicht, die zur Beeinflussung der Biegesteifigkeit mit einer Nut versehen ist und gemeinsam mit der Trägerplatte auf einem Behälter angeordnet sind, im Schnitt.

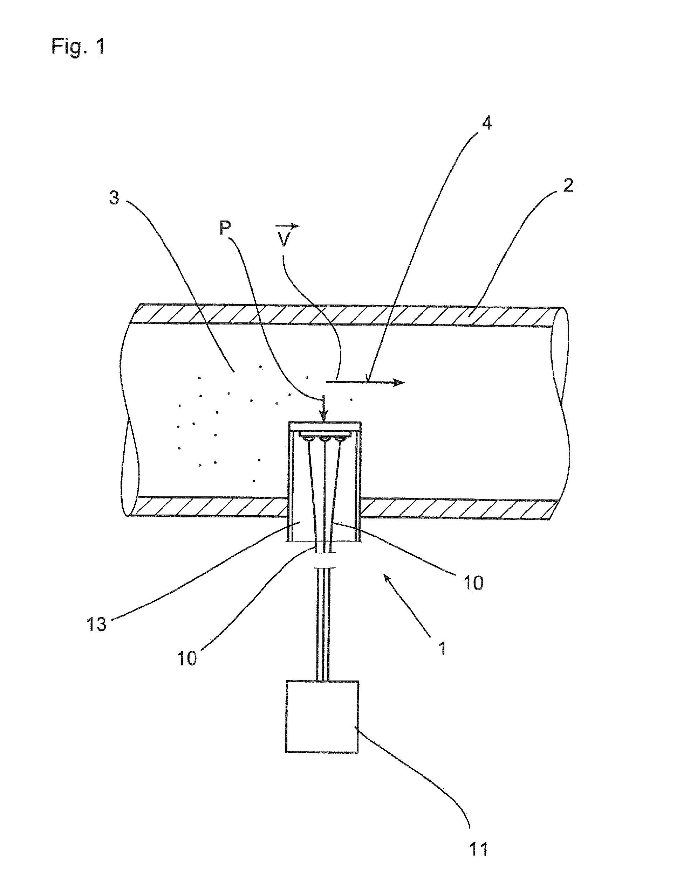

In Figur 1 ist die bevorzugte Einbauposition einer Messeinrichtung 1 zur Bestimmung der Fließgeschwindigkeit V und des Druckes P eines in einem Rohr 2 strömenden Mediums 3 zu entnehmen. Das Medium 3 weist eine vorgegebene Strömungsrichtung 4 auf, die schematisch mit Hilfe eines Strömungspfeiles wiedergegeben ist. Die Fließgeschwindigkeit V des Mediums 3 kann über die Zeit variieren und soll mittels der Messeinrichtung 1 permanent überwacht sein. Das Medium 3 kann sowohl aus einer Flüssigkeit, einem Gas oder einem Flüssigkeits-Gas-Gemisch bestehen. Die spezifischen Stoffwerte des jeweiligen Mediums 3 sind bekannt; darüber hinaus sind die geometrischen Abmessungen und die Materialbeschaffenheit des Rohres 2 vorgegeben und sind bei der Erfassung der einschlägigen physikalischen Parametern, die das Fließverhalten des Mediums 3 kennzeichnen und beeinflussen, berücksichtigt.

Die Messeinrichtung 1 besteht aus einer biegeelastischen Trägerplatte 5 und einem Behälter 13, die eine Ronde bilden, die in eine in das Rohr 2 eingearbeitete Durchgangsöffnung 12 eingesetzt ist. Der Behälter 13 ist an seinem Außenumfang mittels einer Schweißnaht 14 mit dem Rohr 2 verbunden, so dass die Messeinrichtung 1 lageorientiert und gasdicht mit dem Rohr 2 gekoppelt ist.

Die Schweißnaht 14 kann auch als Klebenaht aus Silikon, einem Harz oder einem sonstigen geeigneten Werkstoff mit den entsprechenden gasdichten Fixierungseigenschaften ausgeführt sein.

Die Trägerplatte 5 ist vorzugsweise möglichst zentrumsnah, also im Bereich der Längsachse des Rohres 2, positioniert, da im Zentrum des Rohres 2 die Strömungsgeschwindigkeit V des Mediums 2 am größten bemessen ist. Im Bereich der Rohrinnenseite wird nämlich das vorbeiströmende Medium 3 durch die vorherrschenden Reibkräfte gebremst. Die Messeinrichtung 1 soll jedoch die tatsächliche Strömungsgeschwindigkeit V im Rohrinneren feststellen.

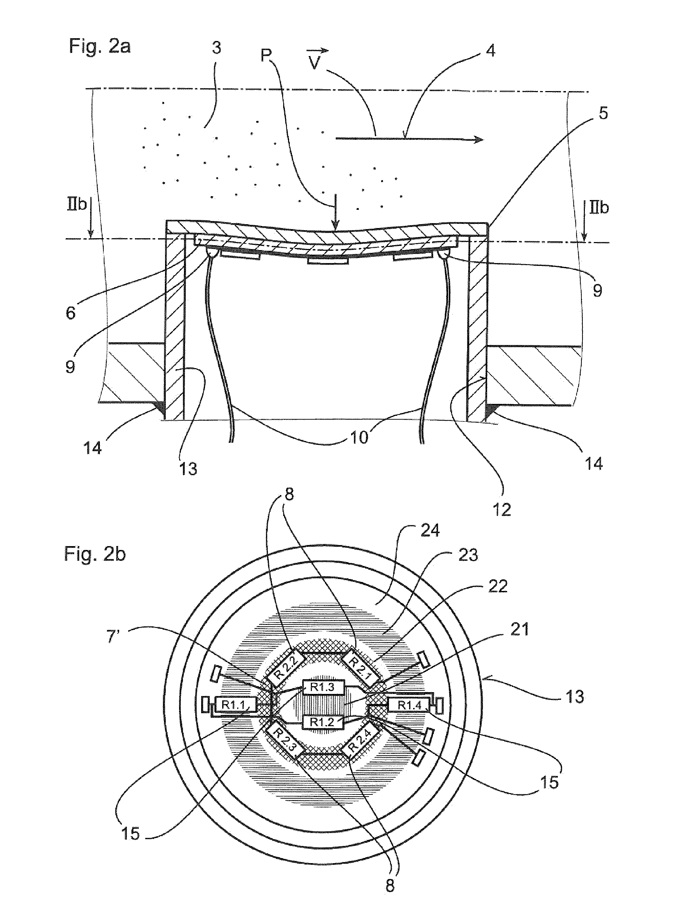

Aus den Figuren 2a und 2b ist ersichtlich, dass auf der dem Medium 3 abgewandten Oberfläche der Trägerplatte 5 die Dielektrikum-Schicht 6 aufgedruckt oder aufgebracht ist. Die Dielektrikum-Schicht 6 überzieht demnach eine der beiden Oberflächen der Trägerplatte 5 und isoliert diese. Auf der Dielektrikum-Schicht 6 sind nach Art einer Sandwichbauweise Heizwiderstandselemente 7 in Form einer rechteck- oder ringförmigen Leiterbahn 7' aus einem wärmeleitenden und wärmeabgebenden Werkstoff vorgesehen. Die Leiterbahn 7' kann vollständig von einer weiteren Dielektrikum-Schicht 6 abgedeckt sein; allerdings sind mindestens zwei Kontaktflächen 9 vorzusehen, die von außen zugänglich sind, also von der Dielektrikum-Schicht 6 nicht bedeckt sind, um die Heizwiderstandselemente 7 impulsweise zu bestromen. Die Anzahl der Heizwiderstandselemente 7 ist beliebig wählbar.

Mittels elektrischer Leitungen 10 sind die Heizwiderstände R2.1, R2.2, R2.3 und R2.4 des Heizwiderstandselementes 7 über Kontaktflächen 9 mit einer nicht dargestellten Stromquelle und einer Steuer- und Auswerteeinheit 11 verbunden.

Auf der dem Medium 3 abgewandten Oberfläche der Trägerplatte 5 ist der Messsensoren 8, in Form von temperaturabhängigen Widerständen R1.1, R1.2, R1.3 und R1.4 in einer Brückenschaltung bzw. Wheatstone'schen-Messbrücke auf der Dielektrikum-Schicht 6 angeordnet.

Da der Druck P des Mediums 3 unterschiedlich zu dem Umgebungsdruck im Behälter 13 ist, verformen sich die biegeelastische Trägerplatte 5 und die Dielektrikum-Schicht 6 in Abhängigkeit von der Druckdifferenz. Ist der Druck P des Mediums 3 größer als ein anliegender Druck innerhalb des Behälters 13, so wird die Trägerplatte 5 nach außen - in die durch den Pfeil angedeutete Richtung - verformt bzw. ausgewölbt oder vice versa. Die Widerstände R1.1, R1.2, R1.3 und R1.4 des Messsensors 8 sind in den Zonen 21 und 23 auf der dem Medium 3 abgewandten Oberfläche der Trägerplatte 5 derart angeordnet, dass diese in den Bereichen höchster Verformungen der Trägerplatte 5 und der Dielektrikum-Schicht 6 liegen. Bei einem vorgegebenen Druck P des Mediums 3 werden die Widerstände R1.2 und R1.3 des Messsensors 8 in der Zone 21 gedehnt und die Widerstände R1.1 und R1.4 in der Zone 23 gestaucht. Die Widerstände des Messsensors 8 sind als Dehn-Mess-Streifen ausgeführt deren Ohm'scher Widerstand durch die Dehnung/Stauchung verändert ist. Die Widerstände des Messsensors 8 sind mit einer nicht dargestellten Stromquelle und einer Steuer- und Auswerteeinheit 11 verbunden, durch die die jeweiligen Widerstandswerte erfasst und ausgewertet sind.

Die Widerstände R1.2 und R1.3 des Messsensors 8 sind in der Mitte der Trägerplatte 5 derart angeordnet, dass der Abstand in der Ebene der Trägerplatte 5 in alle Richtungen zum Heizwiderstandselement 7 bzw. zu den Leiterbahnen 7' gleichgroß bemessen ist. Aufgrund der Temperaturabhängigkeit der Widerstände des Messsensors 8, ist mittels der Widerstände R1.2 und R1.3 des Messsensors 8 ein Temperaturmesswert erfasst und an die Steuer- und Auswerteeinheit 11 weitergeleitet,

Durch die Steuer- und Auswerteeinheit 11 sind die Heizwiderstandselemente 7 impulsweise bestromt, so dass während der Bestromungsphase das Heizwiderstandselement 7 aufgeheizt ist, wodurch sich die Umgebung unmittelbar benachbart zu der Trägerplatte 5 erwärmt. Diese Wärmeenergie wird über die Dielektrikum-Schicht 6 und die Trägerplatte 5 an das an der Trägerplatte 5 vorbeiströmende Medium 3 übertragen, so dass dieses eine Energiezufuhr in Form einer Erwärmung erfährt. Das erwärmte Medium verändert den Ohm'schen-Widerstandwert der Widerstande R1.2 und R1.3 des Messsensors 8. Diese Veränderung wird von der Steuer- und Auswerteeinheit 11 registriert und mit Kenntnis des Betriebszustandes des Heizwiderstandelementes 7 kann mittels Korrelationen die Fließgeschwindigkeit des Mediums ermittelt sein

Eine Vielzahl von Messsensoren 8 können derart angeordnet sein, dass einzelne Widerstände des Messsensors 8 aus mehreren Widerständen bestehen können, die als parallel oder in Reihe geschalteter Dehn-Mess-Streifen ausgeführt sind. Besonders vorteilhaft ist die kompakte Bauweise der Messvorrichtung 1 in dieser Ausführung. Ein oder mehrere Temperaturmesssensoren 15 können in einer derart geschalteten Messvorrichtung 1 zusätzlich angeordnet sein, um redundante Messwerte zu erfassen.

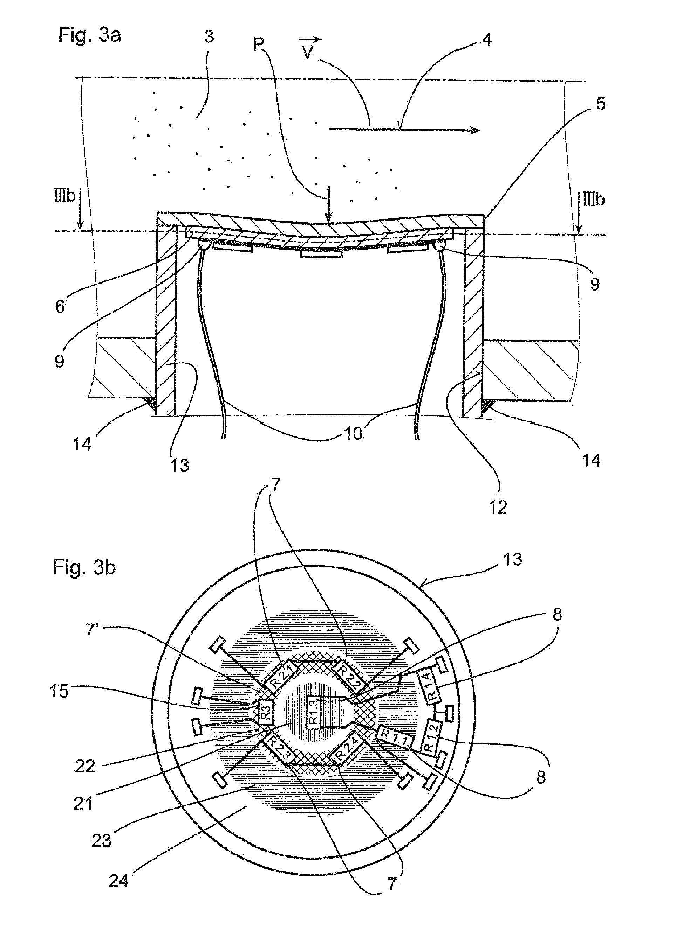

Den Figuren 3a und 3b ist ein zweites Ausführungsbeispiel der Messeinrichtung 1 in der Einbauposition gemäß Figur 1 zu entnehmen. Der Aufbau der Messeinrichtung 1 ist identisch mit den Figuren 2a und 2b, jedoch sind die Widerstände des Messsensors 8 unterschiedlich angeordnet. Ein zusätzlicher Temperaturmesssensor 15 ist zudem auf der dem Medium 3 abgewandten Oberfläche der biegeelastischen Trägerplatte 5 bzw. der Dielektrikum-Schicht 6 angeordnet.

Die Widerstände R1.1, R1.2, R1.3 und R1.4 des Messsensors 8 sind derart angeordnet, dass ausschließlich die Widerstände R1.1 und R1.3 durch eine Verformung infolge einer Druckdifferenz P eine Widerstandsänderung erfahren. Eine derartige Brückenschaltung wird oftmals Halbbrücke genannt. Ist der Druck P des Mediums 3 größer als ein anliegender Druck innerhalb des Behälters 13, wird die Trägerplatte 5 nach außen - in die durch den Pfeil angedeutete Richtung - verformt. In der Zone 21 und in Zone 23 der Trägerplatte 5 bzw. der Dielektrikum-Schicht 6 sind die größten Dehnungen bzw. Stauchungen vorzufinden, so dass diese von den Widerstand R1.1 und R1.3 des Messsensors 8 erfasst sind.

Der Abstand des Widerstands R1.3 ist in der Ebene der Trägerplatte 5 und in der Ebene des vorbeiströmenden Mediums 3 zum Heizwiderstandselement 7 bzw. Leiterbahnen 7' in alle Richtungen identisch. Das Heizwiderstandselement 7, der Temperaturmesssensor 15 und der Messsensor 8 sind mittels elektrischer Leitungen 10 mit der Steuer- und Auswerteeinheit 11 verbunden.

Durch den Messsensor 8 sind nicht nur Messwerte des jeweiligen Druckzustandes P des Mediums 3 erfasst; die Messwerte des Messsensors 8 sind gleichermaßen von der Temperatur abhängig. Wirkt eine Druckkraft P auf die Trägerplatte 5 und verformt diese, verändern sich die Widerstandswerte der Widerstände R1.3 und R1.1 aufgrund einer Dehnung bzw. Stauchung. Diese sind nämlich als Dehn-Mess-Streifen ausgeführt. Eine Längenänderung des Widerstandes bzw. Dehn-Mess-Streifens führt zu unterschiedlichen messbaren Widerstandswerten.

Eine Temperaturänderung ist durch eine Widerstandsänderung des Widerstands R1.3 des Messsensors 8 durch die Steuer- und Auswerteeinheit 11 erfasst. Die Steuer- und Auswerteeinheit 11 kann mittels der Messwerte des Temperaturmesssensors 15 einen Messfehler des Druckwertes aufgrund einer Temperaturänderung kompensieren.

Diese Widerstandswert-Veränderungen sind von der Steuer- und Auswerteeinheit 11 registriert und mit Kenntnis des Betriebszustandes des Heizwiderstandelementes 7 sind mittels Korrelationen die Fließgeschwindigkeit V und der Druck P des Mediums ermittelt.

Es können eine Vielzahl von Messsensoren 8, Temperaturmesssensoren 15 und Heizwiderstandselemente 7 angeordnet sein, damit redundante Messwerte zu generiert sind. Der Temperaturmesssensoren 15 kann als Thermoelement, Transistor, Widerstandsthermometer oder dergleichen ausgeführt sein.

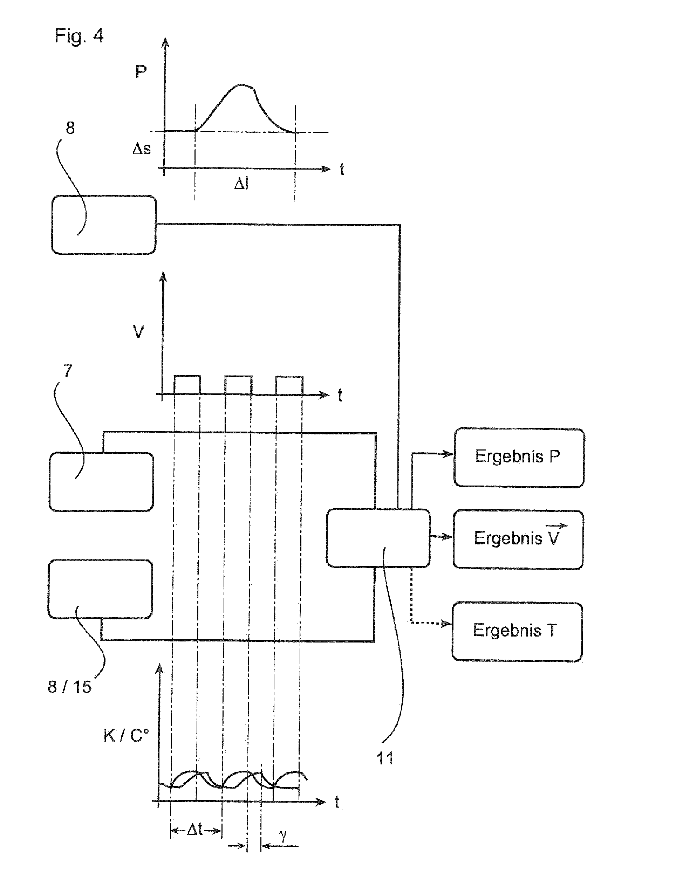

In Figur 4 ist die Steuer- und Auswerteeinheit 11 mit dem Heizwiderstandselement 7 im impulsweisen Betrieb gezeigt. Da der jeweilige Betriebszustand des Heizwiderstandselementes 7 der Steuer- und Auswerteeinheit 11 bekannt ist, können über die von dem Messsensor 8 oder dem Temperaturmesssensor 15 ermittelten Messwerte der Temperatur des Mediums 3 in Korrelation bzw. in ein mathematischphysikalischen Verhältnis mit der Fließgeschwindigkeit V und den Druck P des Mediums 3 gesetzt werden. Insbesondere ist ein Phasenversatz ϕ zwischen dem Messsignal und der Frequenz 1/Δt der impulsweise betriebenen Heizwiderstandselemente 7 erfasst. Mit Hilfe der Steuer- und Auswerteeinheit 11 ist eine zuverlässige und reproduzierbare Bestimmung der Fließgeschwindigkeit V und des Druckes P und wahlweise der Temperatur T des Mediums 3 an der entsprechenden Position der Messeinrichtung 1 ermittelt.

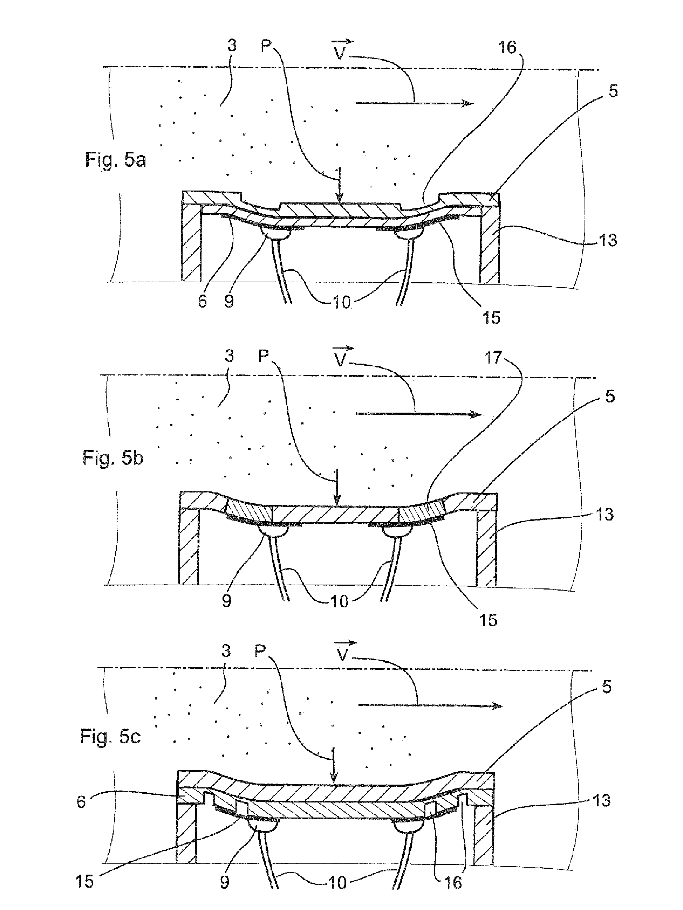

In Figur 5a ist eine Ausführungsvariante der Trägerplatte 5 der Messvorrichtung 1 dargestellt. In der biegeelastischen Trägerplatte 5 ist nämlich eine Nut 16 eingearbeitet, die die Biegesteifigkeit der Trägerplatte 5 in dem Nutenbereich reduzieren, so dass die Trägerplatte 5 durch eine Druckkraft P eine größere Verformung im Nutenbereich erfährt. Ein Widerstand des Messsensors 8 der auf der dem Medium 3 abgewendeten Seite der Trägerplatte 5 in dieser Zone 21, 22 oder 23 angeordnet ist, wird ebenfalls stärker gestaucht/gedehnt, so dass die Widerstandsänderung des Widerstandes des Messsensors 8 deutlich größer ausfällt und der Messsensor 8 sensitiver gegenüber kleiner Druckänderungen ist.

Der Figur 5b ist eine weitere Ausführungsvariante der Trägerplatte 5 zu entnehmen. Die biegeelastische Trägerplatte 5 ist aus verschiedenen Materialpaarungen zur gezielten Beeinflussungen der Biegesteifigkeit geformt. Biegeweiches elastisches Material 17 ist derart in der Trägerplatte 5 angeordnet, dass die Verformung der Trägerplatte 5 infolge einer Druckkraft P des Mediums 3 zunimmt. Die Trägerplatte 5 ist aus einem elektrisch schwach- oder nichtleitenden Material gebildet, so dass eine zusätzliche Dielektrikum-Schicht 6 nicht erforderlich ist. Der Messsensor 8 und die Heizwiderstandselemente 7 sind mittels Kontaktflächen 9 und elektrischer Leitungen 10 mit der Steuer- und Auswerteeinheit 11 verbunden.

In Figur 5c ist eine weitere Ausführungsvariante der Trägerplatte 5 der Messeinrichtung abgebildet. Die biegeelastische Trägerplatte 5 mit einer Dielektrikum-Schicht 6 ist gasdicht und ortsfest auf einem Behälter angeordnet. Auf der dem Medium 3 abgewandten Seite der Trägerplatte 5 ist in die Dielektrikum-Schicht 6 mehrere Nuten 16 eingearbeitet durch die die Biegesteifigkeit des sandwichartigen Verbundes der Trägerplatte 5 mit der Dielektrikum-Schicht 6 beeinflusst ist. Auf der Dielektrikum-Schicht 6 sind die Heizwiderstandselemente 7 bzw. die Leiterbahnen 7' und der Messsensor 8 und ggf. ein Temperaturmesssensor 15 angeordnet und mittels Kontaktflächen 9 und elektrischer Leitungen 10 mit der Steuer- und Auswerteeinheit 11 verbunden.

Die Trägerplatte 5 kann eine konvex oder konkave Form aufweisen und eine oder mehrere Nuten 16 können in die Trägerplatte 5 auf einer oder beiden Seiten einbracht sein, um die Steifigkeit der Trägerplatte 5 gezielt zu beeinflussen. Die Steifigkeit der Trägerplatte 5 kann auch aus mehreren unterschiedlichen Materialien/Materialpaarungen gebildet sein oder aus unterschiedlichen Materialienschichten bestehen. Eine Kombination aus einer Trägerplatte 5 mit eingebrachter Nut 16 und verschiedener Materialien 17 kann vorteilhaft sein. Durch eine gezielt Beeinflussung der Steifigkeit der Trägerplatte 5 sind Bereiche geschaffen, in denen die Verformung infolge einer Druckkraft P besonders stark ausgeprägt sind. Vorzugsweise sind in die Widerstände des Messsensors 8 in diesem Bereich zu positionieren. Dadurch ist es möglich die Genauigkeit der Druckmessung zu erhöhen und einen Messbereich der Messeinrichtung 1 kostengünstig einzustellen.

Mehrere Dielektrikum-Schichten 6 können sandwichartig auf der Trägerplatte 5 angeordnet sein, um eine Vielzahl von Messsensoren 8 und/oder Temperaturmesssensoren 15 mehrschichtig in der Messvorrichtung 1 einzubringen. Auch können ein oder mehrere Messvorrichtungen 1 zu einer Sonde angeordnet sein, um nicht nur den Betrag der Geschwindigkeit, sondern auch die einzelnen GeschwindigkeitsKomponenten zu bestimmen.

Die Form des eingesetzten Rohres 2 ist frei wählbar. Aus strömungsmechanischer Sicht ist eine günstige Form des Rohres zu wählen. Denkbar sind runde-, elliptische-, flügelprofil- oder mehreckige- Formen. Die biegeelastische Trägerplatte 5 kann auch unabhängig von der Geometrie des Rohres 2 gewählt sein. Denkbar sind runde, elliptische oder mehreckige Formen.

Das Heizwiderstandselement 7 besteht aus einer elektrisch- und wärmeleitfähigen Paste auf der Basis von Edelmetallen, die für den Siebdruck geeignet sind. Solche Pasten weisen insbesondere einen hohen Silberanteil auf oder es sind Pasten auf der Basis von Silber mit Palladium (PD) oder Silber mit Palladium (PD) und Platin (PT) geeignet. Darüber hinaus kann auch der Werkstoff Ruthenium für solche Pasten verwendet werden.

## Patentansprüche

1. Messeinrichtung (1) zur Bestimmung des Fließverhaltens eines durch ein Rohr (2) strömendes Mediums (3), bestehend aus
- einer Trägerplatte (5), die in eine in das Rohr (2) eingearbeitete Durchgangsöffnung (12) eingesetzt und gasdicht mit diesem verbunden ist,
- einer auf der Trägerplatte (5) aufgebrachten Schicht (6) vorzugsweise aus Dielektrikum, die auf der Oberfläche der Trägerplatte (5) vorgesehen ist und diese ganz oder teilweise elektrisch isolierend bedeckt,
- aus mindestens einem Messsensor (8, 15), der auf der Oberseite der Dielektrikum-Schicht (6) oder in dieser eingebettet angeordnet ist und der zwei von außen zugängliche Kontaktflächen (9) aufweist, die mit Leitungen (10) verbunden sind und
- aus einer elektrischen Steuer- und Auswerteeinrichtung (11), die elektrisch mit dem jeweiligen Messsensor (8, 15) gekoppelt ist,
**dadurch gekennzeichnet,**
**dass** beabstandet zu dem jeweiligen Messsensor (8, 15) ein Heizwiderstandselement (7), vorzugweise in Form einer geschlossenen Leiterbahn (7'), angeordnet ist, dass das Heizwiderstandselement (7) über mindestens zwei Kontaktflächen (9) und elektrischen Leitungen (10) mit einer Stromquelle und der Steuer- und Auswerteeinrichtung (11) verbunden ist, dass durch die Steuer- und Auswerteeinrichtung (11) das Heizwiderstandselement (7) impulsweise bestromt ist, dass der jeweilige Messsensor (8) aus mehreren temperaturabhängigen Widerständen (R1.1, R1.2, R1.3 und R1.4) gebildet ist und dass durch die Steuer- und Auswerteeinheit (11) die gemessenen Werte des jeweiligen Messsensors (8, 15) erfasst und mit den Steuersignalen des Heizwiderstandselementes (7) verglichen und derart ausgewertet sind, dass durch diese die Strömungsgeschwindigkeit (V) und der Druckzustand (P) des Mediums (3) ermittelbar sind.

2. Messeinrichtung nach Anspruch 1,
**dadurch gekennzeichnet,**
**dass** die Druckänderungen des Mediums (3) durch die temperaturabhängigen Widerstände (R1.1, R1.2, R1.3 und R1.4) des Messsensors (8), der vorzugsweise als Vollbrücke ausgeführt ist, erfasst sind, dass der Abstand zwischen zwei Widerständen (R1.1 und R1.3) und der Leiterbahn (7') in der Ebene der Trägerplatte (5) in alle Richtungen gleichgroß bemessen ist und dass ein Messwert für eine Temperaturänderung des Mediums (3) mittels der temperaturabhängigen Widerstände (R1.1 und R1.3) des Messsensors (8) erfasst ist.

3. Messeinrichtung nach Anspruch 1,
**dadurch gekennzeichnet,**
**dass** die Druckänderungen des Mediums (3) durch die temperaturabhängigen Widerstände (R1.1 und R1.3) bzw. (R1.1 oder R1.3) des Messsensors (8), der vorzugsweise als Halbbrücke oder Viertelbrücke ausgeführt ist, erfasst sind, dass der Abstand zwischen dem Widerstand (R1.3 oder R1.1) und der Leiterbahn (7') in der Ebene der Trägerplatte (5) in alle Richtungen annähernd gleichgroß bemessen ist und dass ein Messwert für eine Temperaturänderung des Mediums (3) mittels der temperaturabhängigen Widerstände (R1.1 oder R1.3) erfasst ist.

4. Messeinrichtung nach Ansprüche 3,
**dadurch gekennzeichnet,**
**dass** ein Temperaturmesssensor (15) räumlich getrennt von dem Messsensor (8) angeordnet ist.

5. Messeinrichtung nach einem der vorgenannten Ansprüche,
**dadurch gekennzeichnet,**
**dass** die Widerstände (R1.1, R1.2, R1.3 und R1.4) des Messsensors (8) in den Bereichen der größtmöglichen Stauchung und/oder Dehnung der Trägerplatte (5) angeordnet sind.

6. Messeinrichtung nach einem der vorgenannten Ansprüche,
**dadurch gekennzeichnet,**
**dass** die Trägerplatte (5) aus einer oder mehreren Dielektrikum-Schichten (6) gebildet ist, oder dass auf der Trägerplatte (5) eine oder mehrere Dielektrikum-Schichten (6) angeordnet sind und/oder dass ein oder mehrere Messsensoren (8) und Temperaturmesssensoren (15) auf oder zwischen den Dielektrikum-Schichten (6) angeordnet sind.

7. Messeinrichtung nach einem der vorgenannten Ansprüche,
**dadurch gekennzeichnet,**
**dass** in die Trägerplatte (5) eine oder mehrere Nuten (16) und/oder unterschiedliche Materialien 17 angeordnet sind die (16) in Richtung des Mediums (3) oder in Richtung der Dielektrikum-Schicht (6) ausgerichtet sind und dass der jeweilige Widerstand des Messsensors (8) im Bereich der jeweiligen Nut (16) positioniert ist.

8. Messeinrichtung nach einem der vorgenannten Ansprüche
**dadurch gekennzeichnet,**
**dass** die temperaturabhängigen Widerstände (R1.1, R1.2, R1.3 und R1.4) des Messsensors (8) aus einem oder mehreren parallel oder in Reihe geschalteten Widerständen gebildet sind und ein oder mehrere Widerstände als Dehn-Mess-Streifen ausgeführt sind.

9. Messeinrichtung nach einem der vorgenannten Ansprüche
**dadurch gekennzeichnet,**
**dass** der Messsensor (8), der Temperaturmesssensoren (15) und die Leiterbahnen (7') in einer gemeinsamen Ebene angeordnet sind und dass der Abstand zwischen den Messsensoren (8), der Leiterbahnen (7) und dem Medium (3) gleichgroß bemessen ist.

10. Messeinrichtung (1) nach einem der vorgenannten Ansprüche,
**dadurch gekennzeichnet,**
**dass** die Trägerplatte (5) im Bereich der Längsachse des Rohres (2) positioniert ist, und dass ein oder mehrere Trägerplatten (5) im Bereich der Längsachse des Rohres 2 angeordnet sind.

11. Messeinrichtung (1) nach einem der vorgenannten Ansprüche,
**dadurch gekennzeichnet,**
**dass** die dem Medium (3) zugewandte Oberfläche der Trägerplatte (5) konvex oder konkav gekrümmt oder als Halbkugel ausgestaltet ist.

12. Messeinrichtung (1) nach einem der vorgenannten Ansprüche,
**dadurch gekennzeichnet,**
**dass** an der umlaufenden Stirnseite der Trägerplatte (5) ein Behälter (13), der als Hohlkörper ausgestaltet ist, angebracht ist und dass durch den Behälter (13) die Trägerplatte (5) und die daran befestigten Temperaturmesssensoren (8), die Heizwiderstandselemente (7) und die Dielektrikum-Schicht (6) gekoppelt sind.

13. Messeinrichtung (1) nach Anspruch 12,
**dadurch gekennzeichnet,**
**dass** der Behälter (13) fest mit dem Rohr (2) bzw. der Behälter (13) mit der Trägerplatte (5), vorzugsweise mittels einer umlaufenden Schweißnaht (14), gasdicht verbunden ist.

14. Messeinrichtung (1) nach einem der vorgenannten Ansprüche,
**dadurch gekennzeichnet,**
**dass** die Leiterbahn (7') eine geschlossene, rechteckförmige Kontur aufweist und das Heizwiderstandselement (7) aus einer elektrisch leitfähigen Paste auf Basis von Edelmetall besteht, die für den Siebdruck auf Keramiksubstraten geeignet ist.

15. Verfahren zur kalorimetrischen Bestimmung der Fließgeschwindigkeit und des Druckes P eines Mediums (3) in einem Rohr (2) mit Hilfe einer Messeinrichtung (1) nach einem der vorgenannten Ansprüche,
**gekennzeichnet durch** die Verfahrensschritte:
- Impulsweises Bestromen eines Heizwiderstandselementes (7),
- Übertragen der derart erzeugten Wärme über die Dielektrikum-Schicht (6) und die Trägerplatten (5) auf das vorbestimmende Medium (3),
- permanentes Messen eines Temperaturwertes des Mediums (3) mit Hilfe mindestens eines Messsensors (8), der benachbart zu dem Heizwiderstandselement (7) angeordnet ist, bzw. sind, und
- Errechnen und Auswerten des Drucks P und der Temperaturveränderung sowie der Phasenlage ϕ zwischen der impulsweisen Bestromung des Heizwiderstandselementes und dem Temperaturmesswert des Messsensors (8) mit Hilfe einer Auswerteeinheit (11), **durch** die anhand der erhaltenen Werte die Fließgeschwindigkeit und der Druck P des Mediums (3) angegeben ist.
